(19) Europäisches Patentamt
European Patent Office
Office européen des brevets

(11) **EP 0 874 513 A2**

(12) **EUROPÄISCHE PATENTANMELDUNG**

(43) Veröffentlichungstag:
28.10.1998 Patentblatt 1998/44

(51) Int. Cl.$^6$: **H04M 9/08**

(21) Anmeldenummer: 98105136.0

(22) Anmeldetag: 20.03.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 10.04.1997 DE 19714966

(71) Anmelder:
SIEMENS AKTIENGESELLSCHAFT
80333 München (DE)

(72) Erfinder: Schertler, Thomas
64289 Darmstadt (DE)

(54) **Vorrichtung zur Rückhördämpfung**

(57) Die Vorrichtung zur Rückhördämpfung ist bei Telefonapparaten mit Freisprecheinrichtung einsetzbar. Sie weist einen Empfangszweig mit einem Lautsprecher (L) und einem Sendezweig mit einem Mikrofon (M) auf. Weiterhin ist ein adaptiver Echokompensator (AK) zur Kompensation des Echos im Sendezweig, sowie eine Dämpfungsvorrichtung (PW) zur Bedämpfung des Sende- oder Empfangszweigs vorgesehen. Ein Mittel zur Bestimmung des Leistungsübertragungsfaktors (LÜF) ist zur Steuerung der Adaption des adaptiven Echokompensators (AK) einerseits und zur Einstellung der Dämpfung der Dämpfungsvorrichtung (PW) andererseits vorgesehen.

FIG2

**Beschreibung**

Die Erfindung betrifft eine Vorrichtung zur Rückhördämpfung, die in Telefonapparaten mit Freisprecheinrichtung verwendet werden kann. Telefonapparate, die für einen Anschluß an das öffentliche Telefonnetz gedacht sind, müssen bestimmten Vorschriften entsprechen. Eine dieser Vorschriften behandelt die Rückhördämpfung, d.h. die Dämpfung des Echos des entfernten Gesprächteilnehmers. In der ITU-T-Empfehlung G. 164, Acoustic Echo Controller, Helsinki, März 1993, Abschnitt 5.4.1., wird eine Echodämpfung von 40 bis 45 dB im Falle von Einzelsprechen (d.h. maximal einer der beiden Gesprächsteilnehmer spricht) gefordert. Diese Dämpfungswerte werden bei einem Gespräch unter Verwendung eines Handapparats aufgrund einer weitgehenden akustischen Entkopplung der Hörmuschel und der Mikrofonkapsel problemlos erfüllt. Bei einer Freisprecheinrichtung, die auf Handapparate verzichtet, ist eine derartige akustische Entkopplung jedoch nicht möglich. Hier müssen besondere Maßnahmen ergriffen werden, um die erforderliche Rückhördämpfung zu erzielen.

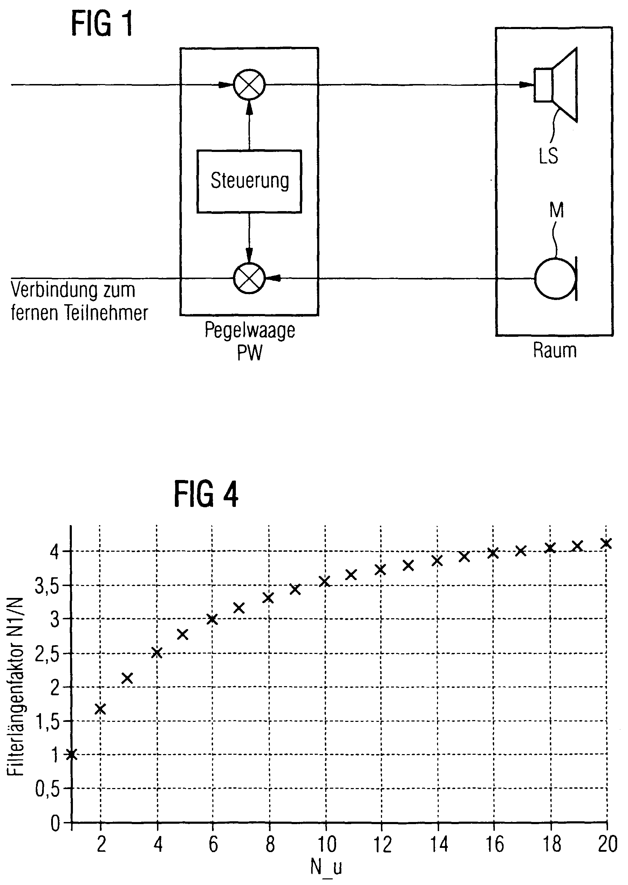

Im größten Teil der käuflich erwerblichen Telefonapparate mit Freisprecheinrichtung befindet sich eine Dämpfungseinrichtung (Pegelwaage, adaptive loss control, Pegelwiege, die in Abhängigkeit des Gesprächszustands die erforderliche Dämpfung entweder in den Sende- oder den Empfangszweig einbringt (siehe hierzu Figur 1). Eine entsprechende Realisierung ist im ARCOFI-Baustein PSB 2163 der Firma Siemens zu finden. Schwierigkeiten treten mit der Freisprecheinrichtung basierend auf Pegelwaagen besonders dann auf, wenn die Gesprächspartner versuchen, sich gegenseitig zu unterbrechen oder gleichzeitig reden. Dann macht sich die eingebrachte Dämpfung negativ bemerkbar und führt dazu, daß einzelne Sprachpassagen „abgehackt" klingen können oder ganz unterdrückt werden. Dieses unbefriedigende Verhalten der Pegelwaagen bei Gegensprechen verhindert bei vielen Benutzern eine Akzeptanz der eingesetzten Freisprecheinrichtungen.

Ein völlig anderer Ansatz, die erforderliche Echo-Dämpfung zu erreichen, liegt in dem Einsatz von digitalen Echokompensatoren. Diese erzeugen Schätzwerte für die Abtastwerte des akustischen Echos im Mikrofonsignal. Durch Subtraktion dieser Schätzwerte von den Abtastwerten des tatsächlichen Mikrofonsignals soll der Echoanteil des Mikrofonsignals soweit wie möglich verringert werden. Der Einsatz von digitalen Filtern zur Echokompensation in Freisprechsystemen wird in T. Becker, E. Hänsler und U. Schultheis, Probleme bei der Kompensation akustischer Echos, Frequenz 6 (36) Seiten 142 bis 148 (1984) beschrieben. Echokompensatoren werden als adaptive Filter ausgelegt, mit denen man versucht, die Übertragungsfunktion des Raums, in dem sich der Telefonapparat befindet, möglichst gut nachzubilden und Änderungen in der Übertragungsfunktion, die durch Bewegungen oder Luft- und Temperaturschwankungen verursacht werden, zu folgen. Die Adaption der Filterkoeffizienten darf nur erfolgen, wenn ein Sprachsignal von der Seite des fernen Teilnehmers vorliegt. Sobald auch der lokale Teilnehmer spricht, kann der Echokompensator divergieren. Bei Gegensprechen (Doubletalk) muß daher die Adaption angehalten oder zumindest stark verlangsamt werden. Bedingt durch mangelnden Systemabgleich kann die Echodämpfung eines Echokompensators zu bestimmten Zeitpunkten gering sein. Diese und andere Randbedingungen (hoher Rechenleistungs- und Speicherbedarf, Platzbedarf und Wärmeentwicklung der Schaltung) führen dazu, daß unter realistischen Bedingungen eine Echodämpfung von etwa 20 bis 25 dB nicht überschritten werden kann.

Um trotzdem die geforderte Echodämpfung gewährleisten zu können, wird man in der Regel einen Echokompensator nur in Verbindung mit einer Pegelwaage betreiben. Der Dämpfungshub der Pegelwaage kann dann um die bereits vom Echokompensator geleistete Echodämpfung verringert werden, so daß das Schaltverhalten der Pegelwaage nicht mehr so störend auffällt.

Aus dem Stand der Technik P. Heitkämper, Freisprechen mit Verstärkungssteuerung und Echokompensation, Fortschritt-Berichte, Reihe 10, Nr. 380, VDI, Germany 1995, ist ein Freisprechverfahren, das auf der Kombination einer Verstärkungssteuerung mit einem Echokompensator basiert, beschrieben. Die Verstärkungssteuerung verwendet eine nicht lineare Kennlinie, die dazu dient, alle Eingangswerte auf der Sendeseite, deren mittlere Kurzzeitleistung über einem bestimmten Schwellwert liegt, so zu verstärken, daß ihre mittlere Leistung einen bestimmten Soll-Pegel annimmt (Kompensationsbereich). Eingangswerte, deren mittlere Leistung kleiner ist als der Schwellwert, werden als Hintergrundgeräusch oder Echo angesehen und abhängig von ihrer mittleren Leistung bedämpft. Die mittlere Kurzzeitleistung der Eingangsdaten wird ermittelt, indem die Beträge der Eingangsdaten von einem nichtlinearen Filter geglättet werden, dessen Zeitkonstanten so gewählt sind, daß sie steigenden Beträgen des Eingangssignals schneller folgen können als fallenden Beträgen. Der Schwellwert, der bestimmt, ob die Eingangsdaten wie ein erwünschtes Sprachsignal oder wie ein unerwünschtes Echo-/Hintergrund-Geräusch behandelt werden, wird adaptiv an das im Raum herrschende Hintergrundgeräusch, den Echopegel und den Pegel des lokalen Gesprächteilnehmers angepaßt. Für die Anpassung des Schwellwerts werden Langzeitmittelwerte für die lokalen und fernen Hintergrundgeräusch- und Sprachpegel, ein Korrelationsmaß zur Sprachacktivitätserkennung und ein Schätzwert für den Lautsprecher-Mikrofon-Kopplungsfaktor (Leistungsverhältnis zwischen dem Empfangssignal und dem Sendesignal).

Die Echokompensation verwendet einen NLMS-Algorithmus (normalized least mean square-Algorithmus), welcher in B.Widrof und M.E. Hoff, Adaptive switching circuits, IRE Westcon CONV. Rec., part 4, S. 96 bis 104, 1960, beschrieben ist. Für den NLMS-Algorithmus setzt eine einfache Schrittweitensteuerung die Adaptionsschrittweite bei unzurei-

2

chender Anregung seitens des fernen Gesprächsteilnehmers oder bei erkannten Gegensprechen zu 0. In allen anderen Fällen wird die Adaptionsschrittweite auf einen konstanten Wert zwischen 0 und 1 gesetzt. Die Filterung wird aus Gründen der Aufwandsreduzierung lediglich unterabgetastet in einem Sechstel des übertragenden Frequenzbandes durchgeführt. Eine ausreichende Anregung wird mittels eines Vergleichs zwischen der mittleren Kurzzeitleistung der Anregung und dem Langzeitmittelwert des fernen Hintergrundgeräuschpegels festgestellt. Gegensprechen wird erkannt, wenn die mittlere Kurzzeitleistung des Sendesignals über den Wert des erwarteten Echos (entspricht mittlere Kurzzeitleistung des Empfangssignals multipliziert mit dem Lautsprecher-Mikrofon-Kopplungsfaktor multipliziert mit dem Sicherheitsfaktor) steigt. Der Lautsprecher-Mikrofon-Kopplungsfaktor wiederum wird nur dann geschätzt, wenn ein zuvor berechnetes Korrelationsmaß eine bestimmte Schwelle überschritten hat.

Durch die Verwendung der nichtlinearen Kennlinie in der Verstärkungssteuerung kann bei dem beschriebenen Verfahren nicht sichergestellt werden, daß die eingangsgenannte ITU-T-Empfehlung G. 164 durch dieses Freisprechverfahren in allen Gesprächssituationen eingehalten wird.

Besondere Verfahren nach der Art, wie sie in obiger Veröffentlichung von P. Heitkämper in VDI Fortschritt-Berichte beschrieben sind, sind auch aus der DE-A 42 29 910 und der DE-A 43 05 256 bekannt geworden.

Die Aufgabe der Erfindung ist es, eine Vorrichtung zur Rückhördämpfung anzugeben, bei der die Empfehlung der ITU-T eingehalten wird, bei der das „Abhacken" einzelner Sprachpassagen vermieden wird und bei der die Nachteile des obengenannten Standes der Technik vermieden werden.

Die Aufgabe wird durch eine Vorrichtung mit den Merkmalen von Patentanspruch 1 gelöst. Vorteilhafte Weiterbildungen ergeben sich aus den abhängigen Ansprüchen 2 bis 11.

So hat der Einsatz von Formfiltern zur Dekorrelation der Eingangssignale gemäß den Ansprüchen 4, 5 und 7 den Vorteil, daß die Adaption beschleunigt wird.

Die Erfindung wird anhand von vier Figuren weiter erläutert.

FIG 1    zeigt eine Freisprecheinrichtung gemäß dem Stand der Technik.

FIG 2    zeigt eine erste erfindungsgemäße Vorrichtung zur Rückhördämpfung.

FIG 3    zeigt eine zweite erfindungsgemäße Vorrichtung zur Rückhördämpfung

FIG 4    zeigt die Vergrößerung der Filterlänge durch verschachtelten Abgleich.

Auf FIG 1 wurde bereits eingangs eingegangen.

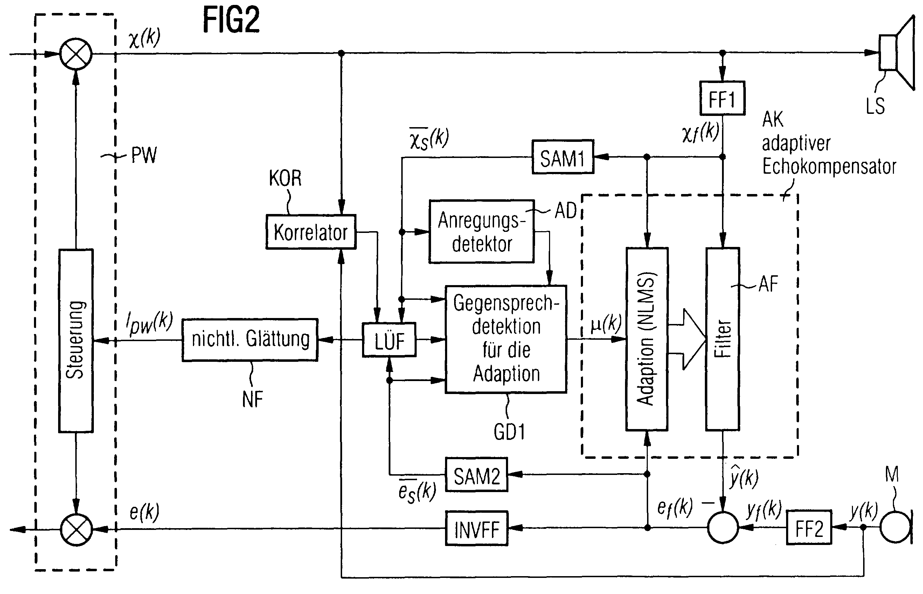

Die Freisprecheinrichtung gemäß FIG 2 weist ein Empfangssignal $x(k)$ auf, das im Empfangszweig einem Lautsprecher LS zugeführt wird. Weiterhin ist ein Sendezweig, der ein Mikrofon M aufweist, vorgesehen. Am Ausgang des Sendezweigs liegt ein Sendesignal $e(k)$ an, das eventuell bedämpft zum fernen Telefonapparat übertragen wird. In der erfindungsgemäßen Vorrichtung ist ein adaptives Filter AF zur Dämpfung des Rückhörens vorgesehen, welches eingangsseitig mit einem ersten Formfilter FF1 und einer ersten Schätzvorrichtung SAM 1 (short term average magnitude) verbunden ist. Das Formfilter FF1 erzeugt aus dem Empfangssignal $x(k)$ ein gefiltertes Empfangssignal $x_f(k)$. Das adaptive Filter AF erzeugt aus diesem Signal ein geschätztes Mikrofonsignal $\hat{y}(k)$, welches vom gefilterten Mikrofonsignal $y_f(k)$ abgezogen wird, um das kompensierte Sendesignal $e_f(k)$ zu erzeugen. Die Koeffizienten des adaptiven Filters AF werden mittels eines NLMS-Algorithmusses in Verbindung mit der entsprechenden Adaptionsschrittweite $\mu(k)$ wie er eingangs bereits beschrieben wurde, eingestellt. Die Eingangsgrößen des NLMS-Algorithmusses sind das gefilterte Eingangssignal $x_f(k)$, die Adaptionsschrittweite $\mu(k)$ und das gefilterte kompensierte Sendesignal $e_f(k)$. Aus dem kompensierten Sendesignal $e_f(k)$ erhält man durch Filterung mittels eines inversen Formfilters INVFF das Sendesignal $e(k)$. Aus dem gefilterten Empfangssignal $x_f(k)$ wird mittels der ersten Schätzvorrichtung SAM 1 ein Kurzzeitbetragsmittelwert $\bar{x}_S(k)$ gebildet, welcher 1. einem Anregungsdetektor AD, 2. einem ersten Gegensprechdetektor GD1 und 3. einer Vorrichtung zur Bestimmung des Leistungsübertragungsfaktors LÜF zugeführt wird. Der erste Gegensprechdetektor GD1 erhält weiterhin als Eingangssignale das Ausgangssignal des Anregungsdetektors AD, den von der Vorrichtung zur Bestimmung des Leistungsübertragungsfaktors LÜF bestimmten Leistungsübertragungsfaktor lüf und einen geschätzten Kurzzeitbetragsmittelwert $\bar{e}_S(k)$ des Sendesignals. Der erste Gegensprechdetektor GD1 bestimmt aus diesen Größen die Adaptionsschrittweite $\mu(k)$ und stellt sie dem adaptiven Echokompensator AK mit adaptivem Filter AF zur Verfügung. Die Vorrichtung zur Bestimmung des Leistungsübertragungsfaktors LÜF weist als Eingangsgrößen den Kurzzeitbetragsmittelwert $\bar{x}_S(k)$ des Empfangssignals, ein Korrelationsmaß, welches von einem Korrelator KOR stammt und den Kurzzeitbetragsmittelwert $\bar{e}_S(k)$ des Sendesignals auf. Der Korrelator KOR bestimmt das Korrelationsmaß dabei aus dem Empfangssignal $x(k)$ und dem Sendesignal $e(k)$. Die Vorrichtung zur Bestimmung des Leistungstübertragungsfaktors LÜF ist mit einem nichtlinearen Filter NF verbunden, welches aus dem Leistungsübertragungsfaktor lüf, durch nichtlineare Glättung eine Steuergröße $l_{pw}(k)$ erzeugt. Diese Steuergröße $l_{pw}(k)$ steuert eine Pegelwaage PW an, die entweder den Sendezweig oder den Empfangszweig bedämpft. Das gefilterte Mikrofonsignal $y_f(k)$ wird mittels eines zweiten Formfilters FF2 aus dem Mikrofonsignal $y(k)$ erzeugt. Der Kurzzeitbetragsmittelwert $\overline{e}_S(k)$ wird mittels einer zweiten Schätzvorrichtung SAM 2 aus dem gefilterten Sendesignal $e_f(k)$ erzeugt.

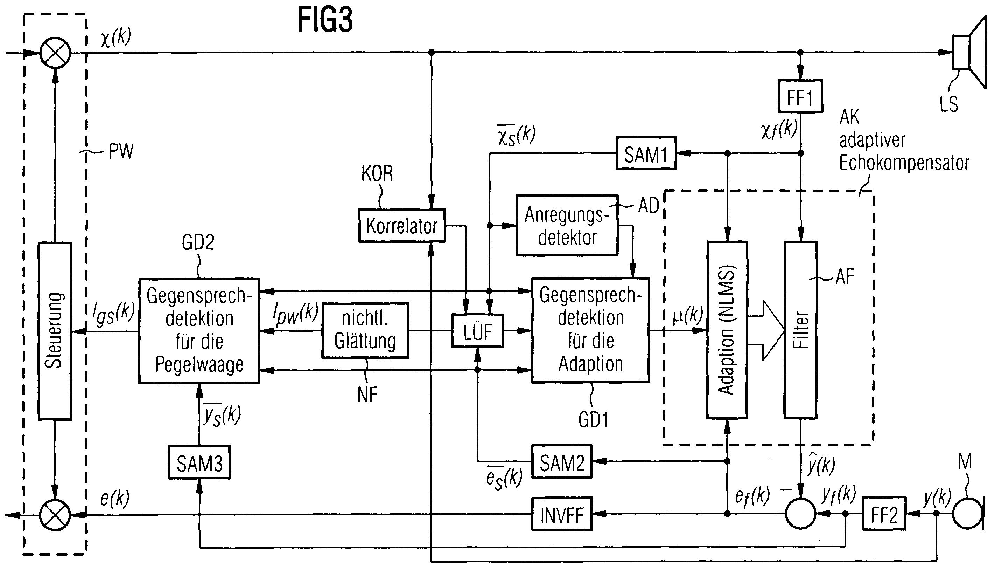

Die Freisprecheinrichtung gemäß FIG 3 weist ein Empfangssignal $x(k)$ auf, das im Empfangszweig einem Lautsprecher LS zugeführt wird. Weiterhin ist ein Sendezweig, der ein Mikrofon M aufweist, vorgesehen. Am Ausgang des Sendezweigs liegt ein Sendesignal $e(k)$ an, das evtl. bedämpft, zum fernen Telefonapparat übertragen wird. In der erfindungsgemäßen Vorrichtung ist ein adaptives Filter AF zur Dämpfung des Rückhörens vorgesehen, welches eingangsseitig mit einem ersten Formfilter FF1 und einer ersten Schätzvorrichtung SAM 1 (short term average magnitude) verbunden ist. Das Formfilter FF1 erzeugt aus dem Empfangssignal $x(k)$ ein gefiltertes Empfangssignal $x_f(k)$. Das adaptive Filter AF erzeugt aus diesem Signal ein geschätztes Mikrofonsignal $\hat{y}(k)$, welches vom gefilterten Mikrofonsignal $y_f(k)$ abgezogen wird, um das kompensierte Sendesignal $e_f(k)$ zu erzeugen. Die Koeffizienten des adaptiven Filters AF werden mittels eines NLMS-Algorithmusses in Verbindung mit der entsprechenden Adaptionsschrittweite $\mu(k)$, wie er eingangs bereits beschrieben wurde, eingestellt. Die Eingangsgrößen des NLMS-Algorithmusses sind das gefilterte Eingangssignal $x_f(k)$, die Adaptionsschrittweite $\mu(k)$ und das gefilterte kompensierte Sendesignal $e_f(k)$. Aus dem kompensierten Sendesignal $e_f(k)$ erhält man durch Filterung mittels eines inversen Formfilters INVFF das Sendesignal $e(k)$. Aus dem gefilterten Empfangssignal $x_f(k)$ wird mittels der ersten Schätzvorrichtung SAM 1 ein Kurzzeitbetragsmittelwert $\overline{x}_S(k)$ gebildet, welcher 1. einem Anregungsdetektor AD, 2. einem ersten Gegensprechdetektor GD1, 3. einer Vorrichtung zur Bestimmung des Leistungsübertragungsfaktors LÜF und 4. einem zweiten Gegensprechdetektor GD2, der ausgangsseitig mit einer Pegelwaage PW verbunden ist, zugeführt wird. Der erste Gegensprechdetektor GD1 erhält weiterhin als Eingangssignale das Ausgangssignal des Anregungsdetektors AD, den von der Vorrichtung zur Bestimmung des Leistungsübertragungsfaktors LÜF bestimmten Leistungsübertragungsfaktor lüf und einen geschätzten Kurzzeitbetragsmittelwert $\overline{e}_S(k)$ des Sendesignals. Der erste Gegensprechdetektor GD1 bestimmt aus diesen Größen die Adaptionsschrittweite $\mu(k)$ und stellt sie dem adaptiven Echokompensator AK mit adaptivem Filter AF zur Verfügung. Die Vorrichtung zur Bestimmung des Leistungsübertragungsfaktors LÜF weist als Eingangsgrößen den Kurzzeitbetragsmittelwert $\overline{x}_S(k)$ des Empfangssignals, ein Korrelationsmaß, welches von einem Korrelator KOR stammt und den Kurzzeitbetragsmittelwert $\overline{e}_S(k)$ des Sendesignals auf. Der Korrelator KOR bestimmt das Korrelationsmaß dabei aus dem Empfangssignal $x(k)$ und dem Sendesignal $e(k)$. Der zweite Gegensprechdetektor GD2 erzeugt aus dem Kurzzeitbetragsmittelwert $\overline{x}_S(k)$ des Empfangssignals, einer Steuergröße $l_{pw}(k)$, welche aus dem Leistungsübertragungsfaktor lüf durch nichtlineare Glättung mittels eines nichtlinearen Filters NF erzeugt wird, dem Kurzzeitbetragsmittelwert $\overline{e}_S(k)$ des Sendesignals und einen Kurzzeitbetragsmittelwert $\overline{y}_S(k)$ des gefilterten Mikrofonsignals $y_f(k)$ eine Steuergröße $l_{GS}(k)$ zur Steuerung der Pegelwaage PW. Der Kurzzeitbetragsmittelwert $\overline{y}_S(k)$ wird mittels einer dritten Schätzvorrichtung SAM 3 aus dem gefilterten Mikrofonsignal $y_f(k)$ erzeugt. Das gefilterte Mikrofonsignal $y_f(k)$ wird mittels eines zweiten Formfilters FF2 aus dem Mikrofonsignal $y(k)$ erzeugt. Der Kurzzeitbetragsmittelwert $\overline{e}_S(k)$ wird mittels einer zweiten Schätzvorrichtung SAM 2 aus dem gefilterten Sendesignal $e_f(k)$ erzeugt.

Die Formfilter FF1, FF2 und INVFF dekorrelieren die entsprechenden Eingangssignale.

Der Leistungsübertragungsfaktor lüf dient nicht der Verschiebung einer Kennlinie, wie dies im oben genannten Stand der Technik P. Heitkämper, Freisprechen mit Verstärkungssteuerung und Echokompensation, Fortschritt-Berichte, Reihe 10, Nr. 380, VDI, Germany 1995 beschrieben wird, sondern der Echokompensation im gesamten Frequenzband.

Die Schätzvorrichtungen SAM1, SAM2 und SAM3 bestimmen die Leistung oder die mittleren Beträge der jeweiligen Signale.

Der erste Gegensprechdetektor GD1 prüft, ob Gegensprechen herrscht und ob der Anregungsdetektor AD ein Anregungssignal liefert. Falls kein Gegensprechen herrscht und der Anregungsdetektor AD ein Anregungssignal liefert, setzt der Gegensprechdetektor GD1 die Adaptionsschrittweite $\mu(k)$ hoch bzw. bestimmt eine optimale Adaptionsschrittweite $\mu_{opt}$ aus:

$$\mu_{opt} = \frac{\text{Erwartungswert}\{\varepsilon(k)\}}{\text{Erwartungswert}\{\varepsilon(k)\}} \text{ wobei } \varepsilon(k) = \underline{g}^T \cdot \underline{x}(k);$$

$\varepsilon(k)$ = Echoanteil im Mikrofonsignal $y(k)$,
$g$ = Raumimpulsantwort und $y(k) = \underline{g}^T \cdot \underline{x}(k) + n(k)$.

Andernfalls wird $\mu(k)$ auf einen kleinen Wert gesetzt. Ziel ist es zu vermeiden, daß das adaptive Filter AF divergiert. Nur wenn der Anregungsdetektor AD eine genügend große Anregung detektiert und kein Gegensprechen herrscht, wird die Adaptionsschrittweite $\mu(k)$ einen großen Wert annehmen.

Die Vorrichtungen gemäß Figur 2 und 3 sind mittels eines Signalprozessors realisierbar.

Die Beschleunigung der Adaption wird durch den Einsatz von Formfiltern (FF1, FF2, INVFF) erreicht. Diese sind nicht adaptiv ausgelegt, um den höheren Aufwand durch einen zusätzlichen Filterzweig zu vermeiden. Die Schrittweitensteuerung für den NLMS-Algorithmus wird im folgenden naher beschrieben.

Insbesondere wird ein Leistungsübertragungsfaktor lüf unter Verwendung eines Korrelationsmaßes bestimmt, der verwendet wird, um Gegensprechen zu detektieren. Im folgenden soll die erfindungsgemäße Vorrichtung mit COREC-F (Correlation Controlled Echo Canceller-Fullband) bezeichnet werden. In der COREC-F-Freisprechvorrichtung wird zur Steuerung der Adaptionsschrittweite $\mu(k)$ in geeigneten Zeitpunkten ein Leistungsübertragungsfaktor lüf zwischen dem Empfangssignal $x(k)$ und dem bereits kompensierten Ausgangssignal $e(k)$ bestimmt. Mit diesem Leistungstübertragungsfaktor lüf können Zeitpunkte, in denen Gegensprechen herrscht, zuverlässig bestimmt und die Adaption des Echokompensators gestoppt werden. Der erste Gegensprechdetektor GD1 ist bei eingeschwungenem Adaptionsfilter damit wesentlich empfindlicher als bei nicht abgeglichenem Kompensator, und das Anhalten der Adaption kann im Gegensprechfall schneller veranlaßt werden. Mit dem Echokompensator und der Pegelwaage von COREC-F ist die ITU-T-Empfehlung zur Echodämpfung einhaltbar.

Aus dem obenbeschriebenen Leistungsübertragungsfaktor lüf wird durch nichtlineare Filterung eine Steuergröße $l_{pw}(k)$ gewonnen, mit welcher der Dämpfungshub der Pegelwaage PW verringert werden kann.

Laut ITU-T-Empfehlung G. 167 ist im Gegensprechfall eine Verringerung des Dämpfungshubs um 15 dB zulässig. Das COREC-F-Freisprechen beinhaltet die zweite Detektionseinheit GD2, mit der zulässige Zeitpunkte für eine Dämpfungshub-Verringerung erkannt werden und dies der Pegelwaage PW über die erwähnte Steuergröße mitgeteilt wird. Die mit dem adaptiven Echokompensator AK maximal mögliche Echodämpfung wird unter anderem auch durch die Anzahl der verwendeten Filterkoeffizienten bestimmt.

Es wurde eine Möglichkeit gefunden, bei konstant gebliebenem Rechenaufwand die Anzahl der Filterkoeffizienten um einen variablen Faktor zu erhöhen. Eine damit verbundene Verringerung der Konvergenzgeschwindigkeit ist bei richtiger Dimensionierung in der praktischen Anwendung nicht störend und kann billigend in Kauf genommen werden.

## Adaptionssteuerung

Die Anpassung des adaptiven Echokompensators AK soll nur durchgeführt werden, wenn eine ausreichende Anregung von der Seite des fernen Teilnehmerapparates vorliegt. Ob eine ausreichende Anregung vorliegt wird mittels dem Anregungsdetektor AD festgestellt, in dem der Kurzzeitbetragsmittelwert des Empfangssignals $\overline{x}_S(k)$ nach Gleichung 1 mit einem adaptiven Empfangssignalschwellwert $x_0(k)$ verglichen wird.

$$\overline{x}_S(k+1) = \begin{cases} \alpha_f \overline{x}_S(k) + \left(1-\alpha_f\right)|x(k)| & \text{für} |x(k)| < \overline{x}_S(k) \\ \alpha_r \overline{x}_S(k) + \left(1-\alpha_r\right)|x(k)| & \text{für} |x(k)| \geq \overline{x}_S(k) \end{cases},$$

$$0 < \alpha_r < \alpha_f < 1$$

Gilt $\overline{x}_s(k) < x_0(k)$, so wird die Adaption wegen unzureichender Anregung gestoppt. Ist der Kurzzeitbetragsmittelwert $\overline{x}_s(k)$ sogar um einen Faktor $p_{bg}$ kleiner als der adaptive Empfangssignalschwellwert $x_0(k)$, dann wird dieser Schwellwert aktualisiert, ansonsten bleibt er unverändert:

$$x_0(k+1) = \begin{cases} \alpha_l x_0(k) + \left(1-\alpha_l\right)|x(k)| & \text{für } \overline{x}_s(k) < p_{bg} \cdot x_0(k) \\ x_0(k) & \text{sonst} \end{cases},$$

$$0 < \alpha_l < 1 \quad (2)$$

Die Faktoren $\alpha_f$ und $\alpha_r$ sind so gewählt, daß der Kurzzeitbetragsmittelwert $\overline{x}_s(k)$ des Empfangssignals steigenden Beträgen von $x_0(k)$ schneller folgt als fallenden Beträgen. Mit der Konstanten $\alpha_l$ wird eine wesentlich größere Zeitkonstante eingestellt.

Liegt ausreichende Anregung vor (der Anregungsdetektor AD liefert ein entsprechendes Anregungssignal), versucht man mittels dem ersten Gegensprechdetektor GD 1 festzustellen, ob gerade Gegensprechen herrscht. Dazu berechnet man den Leistungsübertragungsfaktor lüf(k) vom Eingangssignal x(k) zum bereits kompensierten Sendesignal e(k). Das Sendesignal e(k) berechnet sich aus der Differenz des Mikrofonsignals y(k) und dem mit dem adaptiven Filter AF geschätzten Mikrofonsignal $\hat{y}(k)$. Der geglättete Leistungsübertragungsfaktor (lüf) wird immer dann berechnet, wenn ein Korrelationsmaß p(k) größer als ein Schwellwert $p_0$ wird:

$$l\ddot{u}f(k+1) = \begin{cases} \alpha_{l\ddot{u}f} l\ddot{u}f(k) + \left(1 - \alpha_{l\ddot{u}f}\right) \cdot \dfrac{\overline{x}_s(k)}{\overline{e}_s(k)} & f\ddot{u}r\ p(k) > p_0 \\ l\ddot{u}f(k) & sonst \end{cases} \quad, 0 < \alpha_{l\ddot{u}f} < 1 \quad (3)$$

Der Quotient aus dem Leistungsübertragungsfaktor (lüf) und dem Kurzzeitbetragsmittelwert $\overline{x}_s(k)$ ergibt damit einen Schätzwert für den Kurzzeitbetragsmittelwert $\overline{e}_s(k)$ des zu erwartenden Restechos. Ist nun der Betragsmittelwert $\overline{e}_s(k)$ des tatsächlich vorhandenen Restechos größer als das geschätzte Echo multipliziert mit einer Konstanten $p_{ugs}$ (ugs: unsicheres Gegensprechen), so kann man davon ausgehen, daß ein lokaler Gesprächsteilnehmer redet. Mit der Konstanten $p_{ugs}$ kann man die Empfindlichkeit der Gegensprechererkennung einstellen.

Die Adaptionsschrittweite $\mu(k)$ wird dann wie folgt gewählt:

$$\mu(k) = \begin{cases} \mu_0 & wenn\ \overline{x}_s(k) > x_0(k)\ und\ wenn\ \ \overline{e}_s(k) < p_{ugs}\dfrac{\overline{x}_s(k)}{l\ddot{u}f} \\ 0 & sonst \end{cases} \quad (4)$$

**Kopplung zwischen Echokompensator und Pegelwaage**

Der oben beschriebene Leistungsübertragungsfaktor lüf ist ein Maß für die Dämpfung, die das Sprachsignal des fernen Sprechers erfährt. Für eine Steuerung der Pegelwaage PW kann man kann jedoch durch eine nichtlineare Filterung eine geeignete Steuergröße $l_{pw}$ aus dem Leistungsübertragungsfaktor lüf ableiten:

$$l_{p\omega}(k) = \begin{cases} \beta_f l_{p\omega}(k-1) + \left(1 - \beta_f\right) l\ddot{u}f(k) & f\ddot{u}r\ l\ddot{u}f(k) < l_{p\omega}(k) \\ \beta_r l_{p\omega}(k-1) + \left(1 - \beta_r\right) l\ddot{u}f(k) & f\ddot{u}r\ l\ddot{u}f(k) \geq l_{p\omega}(k) \end{cases} \quad (5)$$

$$0 < \beta_r < \beta_f < 1$$

**Verbesserung der Fähigkeit zum Gegensprechen (Doubletalk)**

In den vorherigen Abschnitten wurde eine Möglichkeit beschrieben, die Adaption des Echokompensators AK während des Gegensprechens zu unterbrechen. Die Adaption wird unterbrochen, wenn der Verdacht auf Gegensprechen besteht.

Vorteilhafter Weise kann die Dämpfung der Dämpfungsvorrichtung PW verringert werden, wenn Gegensprechen detektiert wird. Damit steigt die Qualität der Übertragung bei Gegensprechen.

Der Dämpfungshub sollte erst dann verringert werden, wenn sich der Verdacht auf Gegensprechen erhärtet hat. Um die Momente sicheren Gegensprechens festzustellen, müssen zwei Kriterien gleichzeitig erfüllt sein. Zur Erfüllung des Kriteriums 1 muß der Kurzzeitbetragsmittelwert $\overline{e}_s(k)$ um eine Konstante $p_{sgs}$ (sgs: sicheres Gegensprechen) größer sein als der Wert, der für ein Stoppen der Adaption ausgereicht hat (vgl. Gleichung 4). Kriterium 2 besagt, daß der auf den Kurzzeitbetragswert $\overline{y}_S(k)$ normierte Betrag der Differenz zwischen $\overline{y}_S(k)$ und $\overline{e}_s(k)$ größer als ein Faktor $p_{gs}$ sein muß.

Sind beide Kriterien erfüllt, wird die Erhöhung der Steuergröße $l_{add}$ wie folgt berechnet:

$$l_{add}(k) = \begin{cases} \beta_a l_{add}(k-1) + (1-\beta_a) \cdot 15dB & wenn\ \overline{e}_s(k) < p_{sgs} \cdot p_{ugs} \dfrac{\overline{x}_s(k)}{luf} \\[2mm] und\ \dfrac{\overline{y}_s(k) - \overline{e}_s(k)}{\overline{y}_s(k)} > p_{gs} \\[2mm] \beta_b l_{add}(k) & sonst \end{cases}$$

$$\text{mit}\ 0 < \beta_a < \beta_b < 1. \qquad (6)$$

Die Konstanten $\beta_a$ und $\beta_b$ sind so dimensioniert, daß sich eine größere Trägheit ergibt als bei dem nichtlinearen Filter in Gleichung 5. Die resultierende Steuergröße $l_{gs}(k)$ berechnet sich dann zu:

$$l_{gs}(k) = l_{p\omega}(k) + l_{add}(k). \qquad (7)$$

## Verringerung des Rechenaufwandes

Um bei gegebenem Rechenaufwand die Anzahl N der möglichen Filterkoeffizienten zu erhöhen, kann die Adaption der Filterkoeffizienten auf mehrere Abtastschritte verteilt werden ($N_u$ sei ein ganzzahliger Teiler von N). Die Filterung dagegen wird nach wie vor zu jedem Abtastschritt vorgenommen. Dadurch erreicht man, daß jeder Filterkoeffizient nur zu jedem $N_u$-ten Schritt eine Erneuerung erfährt.

Es sei $\underline{c}(k)$ der gesamte Filtervektor und $\underline{x}(k)$ der Vektor des Eingangssignals mit

$$\underline{c}(k) = \begin{pmatrix} c_0(k) \\ \vdots \\ c_{N-1}(k) \end{pmatrix} \qquad \underline{x}(k) = \begin{pmatrix} x(k) \\ \vdots \\ x(k-N+1) \end{pmatrix} \qquad (8)$$

Die Vektoren der Koeffizienten und der Eingangsdaten können in aneinander anschließende Vektoren (siehe Gleichung 9) oder in ineinander verzahnte Vektoren (siehe Gleichung 10) aufgeteilt werden. Gleiches gilt auch für $\underline{x}(k)$.

$$\underline{c}_1(k) = \begin{pmatrix} c_0(k) \\ \vdots \\ c_{\frac{N}{N_u}-1}(k) \end{pmatrix}, \underline{c}_2(k) = \begin{pmatrix} c_{\frac{N}{N_u}}(k) \\ \vdots \\ c_{2\frac{N}{N_u}-1}(k) \end{pmatrix}, \cdots \underline{c}_{N_u}(k) = \begin{pmatrix} c_{N-N_u}(k) \\ \vdots \\ c_{N-1}(k) \end{pmatrix} \qquad (9)$$

$$\underline{c}_1(k) = \begin{pmatrix} c_0(k) \\ c_{Nu} \\ \vdots \\ c_{N-N_*}(k) \end{pmatrix}, \underline{c}_2(k) = \begin{pmatrix} c_1(k) \\ C_{N_*+1}(k) \\ \vdots \\ c_{N-N_*+1}(k) \end{pmatrix}, \cdots \underline{c}_{Nu}(k) = \begin{pmatrix} c_{N_*-1}(k) \\ c_{2N_*-1}(k) \\ \vdots \\ c_{N-1}(k) \end{pmatrix} \qquad (10)$$

Die sonst für jeden Zeitpunkt k üblichen Gleichungen für Filterung:

$$\hat{y}(k) = \underline{c}^T(k) \cdot \underline{x}(k) \qquad (11)$$

und Adaption:

$$\underline{c}(k+1) = \underline{c}(k) + \mu(k) \frac{y(k) - \hat{y}(k)}{\underline{x}^T(k)\underline{x}(k)} \underline{x}(k) \qquad (12)$$

teilen sich damit für den Adaptionsteil in $N_u$ Gleichungen für aufeinanderfolgende Zeitpunkte auf:

Zeitpunkt k: $\qquad \underline{c}_1(k) = \underline{c}_1(k) + \mu(k) \frac{y(k) - \hat{y}(k)}{\underline{x}^T(k)\underline{x}(k)} \underline{x}_1(k)$

Zeitpunkt k + 1: $\qquad \underline{c}_2(k) = \underline{c}_2(k) + \mu(k) \frac{y(k) - \hat{y}(k)}{\underline{x}^T(k)\underline{x}(k)} \underline{x}_2(k)$

$\qquad \vdots \qquad\qquad\qquad\qquad \vdots$

Zeitpunkt k+ $N_u$-1: $\qquad \underline{c}_{Nu}(k) = \underline{c}_{Nu}(k) + \mu(k) \frac{y(k) - \hat{y}(k)}{\underline{x}^T(k)\underline{x}(k)} \underline{x}_{Nu}(k)$

Da bei dem verwendeten Signalprozessor der Aufwand einer Faltung proportional zur Filterlänge N, der Aufwand des Adaptionsvorganges jedoch proportional 4N ist, können bei einer Wahl von $N_u$ in einem sinnvollen Bereich Verlängerungen des Filters um den Faktor $N_1/N$ erreicht werden (siehe Figur 3):

$$\frac{N_1}{N} = \frac{5}{1 + \frac{4}{N_u}} \qquad (13)$$

wobei: $\quad$ 5 = Aufwand NLMS und Filterung
$\qquad\qquad$ 4 = Aufwand NLMS

Für eine Implementierung erscheint die Wahl von $N_u$ in einem Bereich von zwei bis acht sinnvoll.

In Figur 4 ist auf der Abszissenachse $N_u$ von 0 bis 20 und auf der Ordinatenachse der Filterlängenfaktor $N_1/N$ von 0 bis 4,5 aufgetragen.

Zahlenmäßig bewertet beträgt der Aufwand in der vorliegenden Implementierung etwa 4 für den NLMS-Algorithmus und etwa 5 für den NLMS-Algorithmus und die Filterung. Bei Verwendung eines anderen Signalprozessors kann die zahlenmäßige Bewertung anders ausfallen.

# EP 0 874 513 A2

**Patentansprüche**

1. Vorrichtung zur akustischen Rückhördämpfung,

   mit einem einen Lautsprecher (LS) aufweisenden Empfangszweig ($x(k)$),

   mit einem ein Mikrofon (M) aufweisenden Sendezweig ($y(k)$; $y_f(k)$; $e_f(k)$; $e(k)$),

   mit einem adaptiven Echokompensator (AK) zur Kompensation des Echos im Sendezweig ($y(k)$; $y_f(k)$; $e_f(k)$; $e(k)$), der das Signal im Empfangszweig ($x(k)$) einer adaptiven Filterung unterzieht und das so gewonnene Signal von dem Signal im Sendezweig ($y(k)$; $y_f(k)$; $e_f(k)$; $e(k)$) subtrahiert,

   mit einer Dämpfungseinrichtung (PW), die die Signale im Sende- oder Empfangszweig Sendezweig (($x(k)$); $y(k)$; $y_f(k)$; $e_f(k)$; $e(k)$) mit einer Dämpfung beaufschlagt,

   mit einer Steuereinrichtung (LÜF), die mit dem Echokompensator (AK) und der Dämpfungseinrichtung (PW) verbunden ist und Signale zur Adaption des Echokompensators (AK) und zur Einstellung des Dämpfungsmasses der Dämpfungseinrichtung (PW) abgibt,
   wobei die Steuereinrichtung (LÜF) als Eingangsgrößen die mittlere Signalleistung im Empfangszweig und die mittlere Signalleistung im Sendezweig aufweist,
   **dadurch gekennzeichnet daß,**

   die Steuereinrichtung als weitere Eingangsgröße ein Korrelationsmaß zwischen den Signalen im Empfangszweig und im Sendezweig aufweist, das von einem Korrelator (KOR) geliefert wird.

2. Vorrichtung nach Patentanspruch 1,
   **dadurch gekennzeichnet daß,**

   die Adaption des Echokompensators (AK) durch ein entsprechendes Signal von der Steuereinrichtung (LÜF) angehalten wird, wenn der Korrelator (KOR) ein Gegensprechen im Sendezweig und im Empfangszweig ermittelt.

3. Vorrichtung nach Patentanspruch 1 oder 2,
   **gekennzeichnet durch**

   einen Anregungsdetektor (AD), der ein Signal abgibt, wenn im Empfangszweig ein Signal mit vorbestimmter mittlerer Leistung vorliegt.

4. Vorrichtung nach Patentanspruch 3,
   **dadurch gekennzeichnet daß,**

   eine Adaption des Echokompensators nur dann stattfindet, wenn der Anregungsdetektor ein entsprechendes Signal abgibt.

5. Vorrichtung nach einem der vorhergehenden Patentansprüche,
   **gekennzeichnet durch**

   ein erstes Formfilter (FF1), das zwischen den Empfangszweig und den Echokompensator (AF) geschaltet ist,

   ein zweites Formfilter (FF2), das im Sendezweig dem Mikrofon (M) nachgeschaltet ist,

   ein inverses Formfilter (INVFF), das im Sendezweig dem zweiten Formfilter (FF2) nachgeschaltet ist.

6. Vorrichtung nach Patentanspruch 5,
   **gekennzeichnet durch**

   eine erste Schätzeinrichtung (SAM 1), die zwischen das erste Formfilter (FF1) und die Steuereinrichtung(LÜF) geschaltet ist, den mittleren Betrag des vom ersten Formfilter (FF1) abgegebenen Signals schätzt, und ein ent-

9

sprechendes Signal an die Steuereinrichtung (LÜF) abgibt,

eine zweite Schätzeinrichtung (SAM 2), das der Steuereinrichtung (LÜF) vorgeschaltet ist, den mittleren Betrages des vom Echokompensator (AF) kompensierten Signals im Sendezweig schätzt, und ein entsprechendes Signal an die Steuereinrichtung (LÜF) abgibt.

7. Vorrichtung nach einem der Ansprüche 3 bis 6,
**gekennzeichnet durch**

einen ersten Gegensprechdetektor (GD1), der die vom Anregungsdetektor (AD) und von der Steuereinrichtung (LÜF) abgegebenen Signale verarbeitet und ein entsprechendes Signal an den Echokompensator (AF) liefert.

8. Vorrichtung nach einem der vorhergehenden Patentansprüche,
**gekennzeichnet durch**

einen zweiten Gegensprechdetektor (GD2) zur Steuerung der Dämpfungseinrichtung (PW), der als Eingangsgrößen die mittlere Signalleistung im Empfangszweig , die mittlere Signalleistung im unkompensierten Sendezweig, die mittlere Signalleistung im kompensierten Sendezweig und ein Signal der Steuereinrichtung (LÜF) aufweist und ein entsprechendes Steuersignal an die Dämpfungseinrichtung (PW) abgibt.

9. Vorrichtung nach Patentanspruch 8, **dadurch gekennzeichnet daß,**

der zweite Gegensprechdetektor (GD2) auf die Dämpfungseinrichtung so einwirkt, daß sich die Dämpfung verringert, wenn ein Gegensprechen im Sendezweig und im Empfangszweig erfaßt wird.

10. Vorrichtung nach einem der vorhergehenden Patentansprüche,
**dadurch gekennzeichnet daß,**

zur Erhöhung der Anzahl der Filterkoeffizienten des Echokompensators (AF) die Adaption der Filterkoeffizienten auf meherere Abtastschritte verteilt erfolgt.

11. Vorrichtung nach einem der vorhergehenden Patentansprüche,
**dadurch gekennzeichnet daß,**

die Adaption des Echokompensators (AF) mittels eines Normalized Least Mean Square Verfahrens erfolgt.

# FIG 1

Steuerung

Verbindung zum
fernen Teilnehmer

Pegelwaage
PW

LS

M

Raum

# FIG 4

Filterlängenfaktor N1/N

N_u

FIG2

EP 0 874 513 A2

## FIG3

χ(k)

PW

Steuerung

e(k)

I$_{gs}$(k)

GD2

Gegensprech-detektion für die Pegelwaage

SAM3

$\overline{y_S}$(k)

I$_{pw}$(k)

nichtl. Glättung

NF

KOR

Korrelator

LÜF

SAM2

$\overline{e_S}$(k)

INVFF

$\overline{\chi_S}$(k)

SAM1

Anregungs-detektor

AD

Gegensprech-detektion für die Adaption

GD1

μ(k)

Adaption (NLMS)

Filter

AF

$\hat{y}$(k)

e$_f$(k)

y$_f$(k)

FF2

y(k)

M

FF1

χ$_f$(k)

AK
adaptiver Echokompensator

LS

EP 0 874 513 A2